Europäisches Patentamt

European Patent Office

Office européen des brevets

(11) Publication number : **0 476 948 A2**

# (12) EUROPEAN PATENT APPLICATION

(21) Application number : **91308420.8**

(22) Date of filing : **16.09.91**

(51) Int. Cl.⁵ : **G01K 11/16**

(30) Priority : **17.09.90 GB 9020295**

(43) Date of publication of application :
**25.03.92 Bulletin 92/13**

(84) Designated Contracting States :
**AT BE CH DE DK ES FR GB GR IT LI LU NL SE**

(71) Applicant : **W S COWELL LIMITED**
**P.O. Box 32, Lovetofts Drive**
**Ipswich, Suffolk IP1 5LH (GB)**

(72) Inventor : **Adam, Jeremy Graham**
**17 Grange Road, Redhill Grange**
**Wellingborough, Northants (GB)**

(74) Representative : **Spence, Anne et al**
**Fry, Heath & Spence Mill House Wandle Road**
**Beddington Croydon Surrey CR0 4SD (GB)**

(54) **Indicating devices.**

(57)   The invention concerns indicating devices for use with plants for indicating whether or not a plant is being subjected to the correct conditions of temperature and/or moisture. A label or tag (12) carrying instructions (13) concerning the type of plant for which it is suitable is printed with an enclosed volume of liquid crystal ink (14) which has one colour (7) at a suitable temperature for the plant and other colours (8, 9) when the temperature is too hot or too cold. The device also carries a strip (16) of material which changes colour according to the moisture level of the soil in which it is inserted to give an indication when the soil is too dry. Alternatively an electronic circuit and probe may measure the moisture level. A further device (17) may measure the light level.

FIG.1

EP 0 476 948 A2

This invention relates to indicating devices for use with plants, for indicating whether or not a plant is being given the correct conditions for healthy growth.

Pot plants, particularly those kept indoors, have different requirements from one another for their healthy growth particularly in terms of the temperature and moisture they require. If they are kept at a temperature which is too hot or cold or the soil is kept too wet or dry, while they may not die, they will fail to grow or flower as they should and often the owner will not understand why.

U S Patent Specification 4445788 shows a probe which measures temperature and moisture at different depths in the soil around a plant. The temperature is measured by liquid crystals which change colour and transmit light signals to the surface which can then be viewed or photographed. The moisture is measured by a colour change of the soil. Associated colour calibration charts are provided. This system is complicated and expensive and does not measure the temperature above the soil and around the leaves of a plant.

G B Specification 2059077 and European Specification 0215600 disclose a plant watering indicator tag having a pointed end adapted to be inserted into the soil of a plant pot. The indicator tag has a layer of hygroscopic material such as calcium hydroxide so that the layer draws up the moisture from the soil by capillary action and changes colour when sufficiently wet producing a visual indication of moisture need. There is no means of measuring temperature.

European Specification 0143550 and G B Specification 2197109 disclose the use of liquid crystals or liquid crystal inks which change colour for use in temperature measurement at different ranges of temperature. However, these devices are not associated with care of plants.

An object of this invention is to provide a simple and cheap indicating device for use with a plant, designed to indicate whether the conditions are correct or unsuitable for the plant to thrive.

An indicating device in association with a plant in a pot, the indicating device comprising a planar label/tag printed with information concerning the type of plant, and having an indicating area which is printed with a liquid crystal ink which changes colour according to temperature and is arranged to extend above the soil in the pot so that it will be subjected to substantially the same atmospheric conditions as the part of the plant above the soil, the ink being selected so that it shows one colour for the range of temperature suitable for the plant and at least one other colour for temperatures outside that range. The particular material for each plant type is with advantage chosen to give one colour for suitable temperature, another for a temperature which is too cold and another for a temperature which is too hot.

In another form or additionally the device includes means for indicating the wrong moisture level in the soil. The device has a probe means for insertion in the soil around the plant and indicating means for indicating when the moisture level is unsuitable. This may include a water-sensitive chemical material which changes colour or gives some other indication or preferably is in the form of an electronic circuit powered by a battery and is arranged to give an audio or visual indication if the soil has reached a moisture level where the plant should receive more water. The indicator could also indicate if the moisture level is too high but this is not essential if the indication is given before the moisture level becomes unhealthy and the instructions are to water only when the indicator says so.

With these indicating devices a plant grower can subject each individual plant to the required conditions for its healthy growth.

A material may also be included on the indicating device which changes colour according to the amount of light absorbed during the day. This could provide an indication of whether the plant is receiving too much or too little sunlight.

Embodiments of indicating devices will now be described by way of example only with reference to the accompanying diagramatic drawings of which:-

Figure 1 is a front view of a label/tag

Figure 2 shows an alternative form of label/tag associated with a plant, and

Figure 3 shows an alternative indicating device.

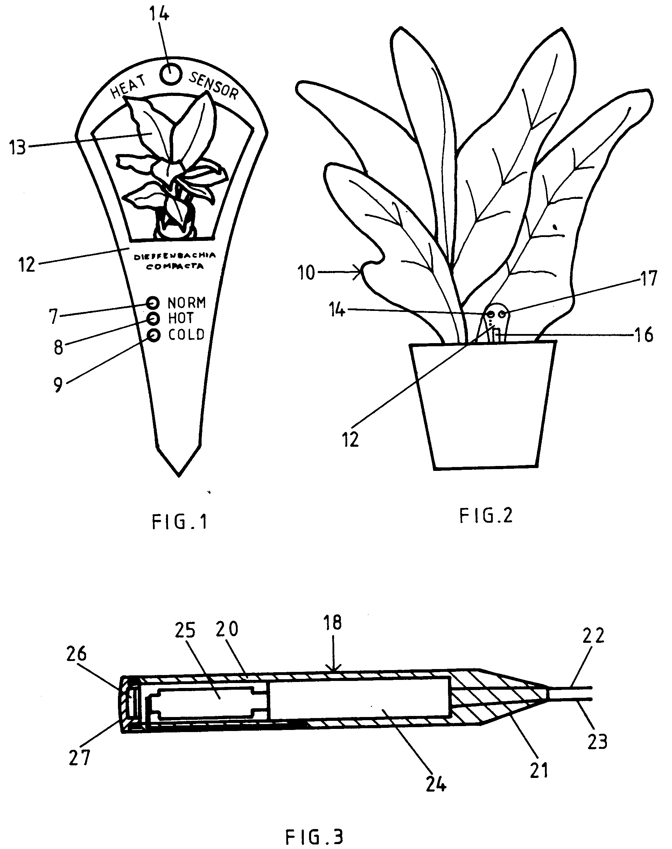

Figure 1 shows a tag or label 12 of plastics material, such as PVC, having a panel 13 printed with a picture of a particular plant and care instructions for that plant. An indicating area comprising a heat sensitive material 14, such as a liquid crystal ink, is encapsulated in a transparent material attached at the top of the label. For example the label may be white and the heat sensitive area consist of a printed panel of black overprinted with the liquid crystal encapsulated ink. A variety of liquid crystal inks are readily available which change colour according to temperature in the range in and around that suitable for plant growth. For example for a particular plant a suitable temperature range may be 12-21°C and an ink is chosen which will be green within this range (as indicated at 7 as normal), blue at a higher temperature (as indicated at 8 as hot) and red at a colder temperature(as indicated at 9 as cold).

The lower end 15 of the tag 12 is tapered for easy insertion into the soil around a plant so that the tag will be subjected to approximately the same light, moisture and temperature conditions as the part of the plant above the soil. The lower part of the label/tag may include a material sensitive to moisture conditions which changes colour according to the moisture conditions in the soil and thus gives an indication when the soil around the plant is too wet or dry. A strip of such material is indicated at 16 in Figure 2 which diagramatically shows the tag in association with a plant 10 in a pot.

The other side of the tag 12 will be printed with care instructions for the plant - for example:-

**DIEFFENBACHIA COMPACTA**

Leopard Lily

A very attractive variegated foliage houseplant.

**POSITION**

Will tolerate most locations but avoid direct sunlight and draughts.

**WATERING**

Keep moist from March to September. Water sparingly in winter.

**TEMPERATURE**

Ideal range 60-75°F (16-24°C)

**FEEDING**

Regularly with liquid fertilizer during growing season.

A further indicating means could be included on the label as shown at 17. This comprises a material sensitive to the amount of light received and arranged to give a signal (such as a colour change) if the amount of light is too little or too great for the particular plant. For example this may be a reactive glass (as used in sun glasses) which darkens the more light it receives or a thin polarising glass wafer with a scale underneath which is exposed or hidden depending on the amount of light falling on it.

Figure 3 shows an alternative device 18 for measuring the moisture content of the soil around a plant. The device comprises a circular sectioned elongate casing 20 tapering at its bottom end 21 from which extends a probe having two conductive prongs 22, 23. The casing houses an electronic circuit 24 powered by a battery 25 and a visual or audio indicating means 26 located below screw cap 27. In the case of a visual indicating device this will be viewable through the cap.

In use the probe is placed into the soil of a household plant pot so that the probe extends to the level of the roots where the moisure is most relevant. The electronic circuitry is designed to measure the level of resistance of the soil between the two contacts on the probe. As the soil dries out the resistance between the two contacts increases. When the level of resistance increases past a predetermined level, determined by the moisture required by a particular plant, the electronic circuit detects this level and activates an intermittent audio warning or turns on a visual indicator such as a light. When water is added to the soil (normal watering of a plant) the resistance level decreases. When the level of resistance between the two contacts of the probe decreases past the predetermined level, the electronic circuit detects such change and de-activates the warning device. The exterior of the casing is printed with instructions on plant care. Different such devices, set to different levels of resistance before a warning is given, will be sold for different ranges of plants and the exterior of the casing will be printed with care instructions and indications as to which plants it is suitable for. The exterior may have a label/tag as in Figure 1 attached to its exterior or may be printed with a liquid crystal ink and temperature information as on the tag of Figure 1.

**Claims**

1. An indicating device in association with a plant (10) in a pot, the indicating device comprising a planar label/tag (12) printed with information (13) concerning the type of plant, and having an indicating area which is printed with a liquid crystal ink (14) which changes colour according to temperature and is arranged to extend above the soil in the pot so that it will be subjected to substantially the same atmospheric conditions as the part of the plant above the soil, the ink being selected so that it shows one colour (7) for the range of temperature suitable for the plant and at least one other colour (8,9) for temperatures outside that range.

2. A set of indicating devices, each according to Claim 1, characterised in that the devices of the set include different inks changing colours in different ranges for use with different plant types.

3. An indicating device or set of indicating devices according to Claim 1 or Claim 2 characterised by means (16,26) responsive to the level of moisture in the soil containing the plants roots and arranged to give an indication when the moisture level is incorrect for a particular type of plant.

4. An indicating device or set of indicating devices according to Claim 3 in which the device is arranged to give an audio signal or light a light to indicate that the moisture level is incorrect.

5. An indicating device or set of indicating devices according to any of Claim 3 or Claim 4 in which the means for measuring the moisture includes an electronic circuit and probe means for insertion in the soil containing a plant's roots and in which the electronic circuit is arranged to measure the electrical resistance of the soil.

6. A device or set of devices according to any of Claims 1 to 5 characterised by means (17) for measuring the level of light received by the device during a day and arranged to give an indication if this level is incorrect for the associated plant.

FIG.1

FIG.2

FIG.3